(19) Europäisches Patentamt
European Patent Office
Office européen des brevets

(11) **EP 4 032 992 B1**

(12) **EUROPEAN PATENT SPECIFICATION**

(45) Date of publication and mention
of the grant of the patent:
**27.03.2024 Bulletin 2024/13**

(21) Application number: **20865982.1**

(22) Date of filing: **16.09.2020**

(51) International Patent Classification (IPC):
*C21D 8/02* $^{(2006.01)}$   *C22C 38/12* $^{(2006.01)}$
*C22C 38/26* $^{(2006.01)}$   *C22C 38/48* $^{(2006.01)}$
*C21D 9/46* $^{(2006.01)}$   *C21D 1/18* $^{(2006.01)}$
*C22C 38/02* $^{(2006.01)}$   *C22C 38/04* $^{(2006.01)}$
*C22C 38/06* $^{(2006.01)}$   *C22C 38/00* $^{(2006.01)}$
*C22C 38/08* $^{(2006.01)}$   *C22C 38/16* $^{(2006.01)}$
*C21D 1/25* $^{(2006.01)}$   *C22C 38/58* $^{(2006.01)}$

(52) Cooperative Patent Classification (CPC):
**C21D 1/18; C21D 1/25; C21D 8/021; C21D 8/0226;
C21D 8/0263; C21D 9/46; C22C 38/002;
C22C 38/005; C22C 38/02; C22C 38/04;
C22C 38/06; C22C 38/08; C22C 38/12;
C22C 38/16; C22C 38/26;** (Cont.)

(86) International application number:
**PCT/JP2020/034995**

(87) International publication number:
**WO 2021/054344 (25.03.2021 Gazette 2021/12)**

(54) **THICK STEEL SHEET, AND METHOD FOR PRODUCING THICK STEEL SHEET**

DICKES STAHLBLECH UND VERFAHREN ZUR HERSTELLUNG EINES DICKEN STAHLBLECHS

TÔLE D'ACIER ÉPAISSE ET PROCÉDÉ DE PRODUCTION DE TÔLE D'ACIER ÉPAISSE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.09.2019 JP 2019171231**

(43) Date of publication of application:
**27.07.2022 Bulletin 2022/30**

(73) Proprietor: **JFE Steel Corporation
Tokyo 100-0011 (JP)**

(72) Inventor: **TERAZAWA, Yusuke
Tokyo 100-0011 (JP)**

(74) Representative: **Grünecker Patent- und
Rechtsanwälte
PartG mbB
Leopoldstraße 4
80802 München (DE)**

(56) References cited:
**EP-A1- 3 502 295     WO-A1-2018/216665
JP-A- S6 320 414     JP-A- H10 237 551
JP-A- 2018 031 069     JP-A- 2018 059 187**

**(Cont. next page)**

(52) Cooperative Patent Classification (CPC): (Cont.)
   **C22C 38/48;** C22C 38/00; C22C 38/58; Y02E 10/72;
   Y02P 70/50

**Description**

Technical Field

The present invention relates to a steel plate with high strength, toughness, and bending workability. The present invention also relates to a method for manufacturing a steel plate.

Background Art

Wind power generators are becoming larger to improve power generation efficiency and require steel plates with higher strength. Steel plates for wind power generators of a monopile type, which is a mainstream support structure for offshore wind power generators, are bended to form pipes. In offshore wind power generators, waves and drift ice collide with the surface layer of steel plates used for support structures. It is therefore necessary for a steel plate to have high bending workability and have high toughness at the surface layer and at the center of the thickness of the steel plate.

It has been known that the strength of steel plates is improved by adding an alloying element and increasing the cooling rate from the austenite region to form a steel microstructure with higher strength.

It has also been known that the toughness of steel plates is improved by decreasing the grain size of the steel microstructure. For example, as described in Patent Literature 1, it has been known that controlled rolling is effective in decreasing the grain size. In the controlled rolling, rolling is performed in a non-recrystallization low-temperature range in which austenite is particularly less likely to be recrystallized, and strain introduced therein is utilized for a transformation nucleus.

As a steel plate with improved strength and bending workability, for example, Patent Literature 2 describes a steel plate with a composition that contains on a mass percent basis adequate amounts of C, Si, Mn, P, S, Al, Ti, N, Nb, V, and Cr, Ti and N satisfying $4.0 \geq Ti/N \geq 2.0$, the equivalent carbon content Ceq defined by a given formula ranging from 0.35 to 0.50, and the remainder being Fe and incidental impurities, wherein the microstructure at a position up to 5 mm from a surface of the steel plate in the thickness direction is composed of 30% to 70% by area of a polygonal ferrite phase, the remainder being a bainite phase, a martensite phase, or a mixed phase thereof, the microstructure from a position of 5 mm from the surface of the steel plate to the center of the thickness of the steel plate is composed of 30% or less by area of a polygonal ferrite phase, the remainder being a bainite phase, a pearlite phase, or a mixed phase thereof, and a Vickers hardness HV at a position of 1 mm from the surface of the steel plate in the thickness direction is 260 HV or less. EP 3 502 295 A1 describes a thick steel plate for large structural members and a production method therefor, and JP S63 20414 A describes the production of a high-toughness high-tensile steel plate.

Citation List

Patent Literature

PTL 1: Japanese Examined Patent Application Publication No. 49-7291
PTL 2: Japanese Unexamined Patent Application Publication No. 2019-52341

Summary of Invention

Technical Problem

However, the technique disclosed in Patent Literature 2 aims to improve strength and bending workability, and the toughness at the surface layer and at the center of the thickness of the steel plate is not studied.

Although a large amount of alloying element must be added to a steel plate to ensure high strength at the center of the thickness of the steel plate, as described above, a surface layer with a high cooling rate in the steel plate with a high alloy component content has a microstructure with very high strength, and therefore the steel plate has low bending workability and toughness.

In rolling at low temperatures to improve toughness at the center of the thickness of a steel plate, due to a large temperature distribution in the thickness direction of the steel plate, particularly with a large thickness, transformation from an austenite microstructure to a low-temperature-formed microstructure, such as ferrite or pearlite, occurs near the steel plate surface layer while rolling. Consequently, processing strain due to the rolling is introduced into the surface layer microstructure of the steel plate and significantly impairs the bending workability and toughness.

It is therefore difficult for a steel plate, particularly with a large thickness, to simultaneously have high strength, high toughness at the surface layer and at the center of the thickness of the steel plate, and high bending workability.

The present invention has been made in view of the above problems and aims to provide a steel plate, particularly with a large thickness, that has high strength, high toughness at the surface layer and at the center of the thickness of the steel plate, and high bending workability. The present invention also aims to provide a method for manufacturing the steel plate.

The term "high strength", as used herein, refers to a yield strength of 300 MPa or more and a tensile strength of 400 MPa or more at the center of the thickness of a steel plate in a tensile test.

The term "high toughness", as used herein, refers to an impact absorbed energy of 60 J or more each at a position 1 mm below the surface of a steel plate and at the center of the thickness of the steel plate in a Charpy impact absorption test at -40°C. The impact absorbed energy is preferably 100 J or more.

The term "high bending workability", as used herein, refers to no flex cracking in a steel plate surface layer at a bend radius R (the radius of a bending punch)/t (plate thickness) of 1.0 in a 180-degree bending test.

The tensile test, the Charpy impact absorption test, and the bending test can be performed by the methods described in the examples described later.

Solution to Problem

As a result of extensive studies to solve the above problems, the present inventors have obtained the following findings.

First, the formation of a high-strength microstructure with low toughness and bending workability in a surface layer of a steel plate due to excessively high hardenability is prevented while ensuring the strength required depending on the thickness of the steel plate. To this end, the equivalent carbon content (Ceq) and the cooling rate in the temperature range of 700°C to 550°C in which transformation from austenite occurs were controlled.

Next, in a steel plate with a large temperature distribution at the surface layer and at the center of the thickness in the thickness direction of the steel plate, rolling reduction in a non-recrystallization temperature range is made possible at the center of the thickness of the steel plate while the formation of a microstructure with low bending workability and toughness into which processing strain is introduced is suppressed in the steel plate surface layer. To this end, Nb was added which have an effect to shift the non-recrystallization temperature range of austenite to the high temperature side by solid solution Nb or fine precipitated NbC. The non-recrystallization temperature of steel containing Nb is (8250[Nb] + 770°C) or lower.

Next, for a steel plate with high bending workability, high toughness at the steel plate surface layer, and high toughness at the center of the thickness of the steel plate, it is effective to appropriately control hot rolling conditions each at the steel plate surface layer and at the center of the thickness of the steel plate.

Thus, the following control is performed to control the microstructure of the steel plate surface layer. First, the steel plate surface layer is once cooled to an $A_{r3}$ temperature or lower during hot rolling to transform austenite to a low-temperature-formed microstructure, such as ferrite, and is then heated to an $A_{c3}$ temperature or higher by recuperation for retransformation into the austenite microstructure, thereby forming fine austenite in the steel plate surface layer.

Subsequently, the steel plate surface layer is subjected to rolling reduction at a rolling reduction ratio of 25% or more at a steel plate surface layer temperature in the non-recrystallization temperature range of (8250[Nb] + 770°C) to the $A_{r3}$ temperature to introduce processing strain into austenite in the steel plate surface layer. The steel plate is then rolled at a total rolling reduction ratio of 15% or less at a steel plate surface layer temperature in the temperature range below the $A_{r3}$ temperature to prevent the microstructure of the steel plate surface layer from becoming ferrite or pearlite into which processing strain is introduced. The microstructure controlling can form a steel plate surface layer with a microstructure that simultaneously has a low dislocation density, a small grain size, and high bending workability and toughness.

Furthermore, to control the microstructure at the center of the thickness of the steel plate (1/2t), the following control is performed during the hot rolling of the steel plate surface layer. The center of the thickness of the steel plate can be rolled at a total rolling reduction ratio of 25% or more in the temperature range in which the temperature at the center of the thickness of the steel plate is in the non-recrystallization temperature range of (8250[Nb] + 770°C) or lower to form a tough microstructure with a fine grain size even at the center of the thickness.

Thus, it was found that even a steel plate can simultaneously have high strength, high toughness at the surface layer and at the center of the thickness of the steel plate, and high bending workability by controlling Ceq and the cooling rate between 700°C and 550°C depending on the thickness of the steel plate and by controlling the microstructure at the steel plate surface layer and at the center of the thickness of the steel plate during hot rolling.

The present invention has been made on the basis of these findings. The present invention is specified in the appended claims.

Advantageous Effects of Invention

The present invention can provide a steel plate with high strength, high toughness at the surface layer and at the center of the thickness of the steel plate, and high bending workability, and a method for manufacturing the steel plate.

A steel plate according to the present invention can be applied to not only offshore wind power generation but also shipbuilding, line pipes, offshore structures, and buildings, for example.

Description of Embodiments

The present invention is described in detail below.

First, the chemical composition and steel microstructure of a steel plate according to the present invention are described below.

[Chemical Composition]

In the present invention, it is important that a steel plate and a steel material used to manufacture the steel plate have the above chemical composition. The following are the reasons for limiting the chemical composition of a steel material in the present invention as described above. Unless otherwise specified, "%" of a chemical component, as used herein, refers to "% by mass".

C: 0.04% to 0.14%

C is an element that can improve the strength of a steel plate at the lowest cost and contributes to strengthening austenite grain boundaries. A C content of less than 0.04% results in low austenite grain boundary strength, hot cracking of a slab, and consequently significantly low productivity. Furthermore, the strength desired in the present invention cannot be achieved. However, a C content of more than 0.14% results in poor weldability. This also results in low toughness. Thus, the C content ranges from 0.04% to 0.14%. The C content is preferably 0.05% or more and preferably 0.12% or less, more preferably 0.06% or more, and more preferably 0.11% or less.

Si: 0.03% to 0.70%

Although Si is an element effective for deoxidization, a sufficient effect cannot be achieved at a Si content of less than 0.03%. However, a Si content of more than 0.70% results in poor weldability. Thus, the Si content ranges from 0.03% to 0.70%. The Si content is preferably 0.04% or more and preferably 0.60% or less, more preferably 0.05% or more, and more preferably 0.55% or less.

Mn: 0.30% to 2.50%

Mn is an element that can improve the hardenability and strength of steel at low cost. These effects require a Mn content of 0.30% or more. However, a Mn content of more than 2.50% results in poor weldability. Thus, the Mn content ranges from 0.30% to 2.50%. The Mn content is preferably 0.50% or more and preferably 2.20% or less, more preferably 0.60% or more, and more preferably 2.10% or less.

P: 0.030% or less

P is an element that significantly embrittles grain boundaries, and a high P content results in steel with low toughness. Thus, the P content is 0.030% or less, preferably 0.025% or less. Less P is preferred, and the lower limit of the P content may be, but is not limited to, 0%. However, P is an element inevitably contained in steel as an impurity, and an excessively low P content results in an increase in refining time and cost. Thus, the P content is preferably 0.001% or more.

S: 0.0200% or less

S reduces the toughness of steel, and the S content is 0.0200% or less. The S content is preferably 0.0100% or less. Less S is preferred, and the lower limit of the S content may be, but is not limited to, 0%. However, S is an element inevitably contained in steel as an impurity, and an excessively low S content results in an increase in refining time and cost. Thus, the S content is preferably 0.0001% or more.

Nb: 0.001% to 0.100%

Nb is an element that suppresses recrystallization as solid solution Nb or fine precipitated NbC when strain is applied to the austenite microstructure and that has the effect of shifting the non-recrystallization temperature range to a higher temperature range. These effects require a Nb content of 0.001% or more. However, a Nb content of more than 0.100% results in poor weldability. Thus, the Nb content ranges from 0.001% to 0.100%. The Nb content is preferably 0.005% or more and preferably 0.075% or less. The Nb content is more preferably 0.050% or less.

Al: 0.001% to 0.100%

Al is an element that is effective as a deoxidizing agent and has the effect of forming a nitride and decreasing the austenite grain size. These effects require an Al content of 0.001% or more. However, an Al content of more than 0.100% results in a steel material or steel plate with low cleanliness and consequently with low ductility and toughness. Thus, the Al content ranges from 0.001% to 0.100%. The Al content is preferably 0.005% or more and preferably 0.080% or less.

O: 0.01% or less

O is an element that lowers ductility and toughness, and therefore the O content is 0.01% or less. Less O is preferred, and the lower limit of the O content may be, but is not limited to, 0%. However, O is an element inevitably contained in steel as an impurity, and an excessively low O content results in an increase in refining time and cost. Thus, the O content is preferably 0.0005% or more.

N: 0.01% or less

N is an element that lowers ductility and toughness, and therefore the N content is 0.01% or less. Less N is preferred, and the lower limit of the N content may be, but is not limited to, 0%. However, N is an element inevitably contained in steel as an impurity, and the N content may industrially be more than 0%. An excessively low N content results in an increase in refining time and cost. Thus, the N content is preferably 0.0005% or more.

A steel plate according to the present invention contains these components, and the remainder is composed of Fe and incidental impurities.

A steel plate according to the present invention contains these components as a basic chemical composition. Although these essential elements can provide the characteristics desired in the present invention, if necessary, the following elements may be contained to further improve the strength or weldability (toughness of a weld zone, welding workability, etc.).

One or two or more selected from the group consisting of Cu: 2.00% or less, Ni: 2.50% or less, Cr: 1.50% or less, Mo: 1.00% or less, Ti: 0.100% or less, V: 0.30% or less, B: 0.0100% or less, W: 0.50% or less, Ca: 0.0200% or less, Mg: 0.0200% or less, and REM: 0.0500% or less

Cu: 2.00% or less

Cu is an element that can improve the strength of a steel plate without great degradation of the base material and toughness. However, a Cu content of more than 2.00% results in a hot cracking problem caused by a Cu-enriched layer formed directly under a scale. Thus, when Cu is contained, the Cu content is preferably 2.00% or less, more preferably 0.01% or more, and more preferably 1.50% or less, still more preferably 0.15% or more, and still more preferably 1.00% or less.

Ni: 2.50% or less

Ni is an element that has the effects of enhancing the hardenability of steel and improving the toughness of the steel. However, a Ni content of more than 2.50% results in the problem of increased manufacturing costs. Thus, when Ni is contained, the Ni content is preferably 2.50% or less, more preferably 0.01% or more, and more preferably 2.00% or less, still more preferably 0.15% or more, and still more preferably 1.50% or less.

Cr: 1.50% or less

Cr is an element that can improve the hardenability of steel and thereby improve the strength of a steel plate. However, a Cr content of more than 1.50% results in poor weldability. Thus, when Cr is contained, the Cr content is preferably 1.50% or less, more preferably 0.01% or more, and more preferably 1.20% or less, still more preferably 0.15% or more, and still more preferably 0.90% or less.

Mo: 1.00% or less

Mo is an element that can improve the hardenability of steel and thereby improve the strength of a steel plate. However, a Mo content of more than 1.00% results in poor weldability. Thus, when Mo is contained, the Mo content is preferably 1.00% or less, more preferably 0.01% or more, and more preferably 0.80% or less, still more preferably 0.05% or more, and still more preferably 0.60% or less.

Ti: 0.100% or less

Ti is an element that precipitates as TiN and thereby has the effects of pinning the movement of grain boundaries and suppressing grain growth. However, a Ti content of more than 0.100% results in a steel microstructure with low cleanliness and consequently with low ductility and toughness. Thus, when Ti is contained, the Ti content is preferably 0.100% or less, more preferably 0.001% or more, and more preferably 0.080% or less, still more preferably 0.005% or more, and still more preferably 0.050% or less.

V: 0.30% or less

V is an element that can improve not only the hardenability of steel but also the strength of a steel plate due to the formation of carbonitride. However, a V content of more than 0.30% results in poor weldability. Thus, when V is contained, the V content is preferably 0.30% or less, more preferably 0.01% or more, and more preferably 0.25% or less, still more preferably 0.15% or less.

B: 0.0100% or less

B is an element that is added in a trace amount to have the effects of improving hardenability and improving the strength of a steel plate. However, a B content of more than 0.0100% results in poor weldability. Thus, when B is contained, the B content is preferably 0.0100% or less, more preferably 0.0001% or more, and more preferably 0.0070% or less, still more preferably 0.0005% or more, and still more preferably 0.0050% or less.

W: 0.50% or less

W is an element that can improve the hardenability of steel and thereby improve the strength of a steel plate. However, a W content of more than 0.50% results in poor weldability. Thus, when W is contained, the W content is preferably 0.50% or less, more preferably 0.01% or more, and more preferably 0.40% or less, still more preferably 0.05% or more, and still more preferably 0.35% or less.

Ca: 0.0200% or less

Ca is an element that forms an oxysulfide with high stability at high temperatures and thereby improves weldability. However, a Ca content of more than 0.0200% results in steel with low cleanliness and toughness. Thus, when Ca is contained, the Ca content is 0.0200% or less, preferably 0.0001% or more, and preferably 0.0180% or less, more preferably 0.0005% or more, and more preferably 0.0060% or less.

Mg: 0.0200% or less

Mg is an element that forms an oxysulfide with high stability at high temperatures and thereby improves weldability. At a Mg content of more than 0.0200%, however, the effects of adding Mg are saturated and the effects cannot be commensurate with the Mg content, which is economically disadvantageous.
Thus, when Mg is contained, the Mg content is 0.0200% or less, preferably 0.0001% or more, and preferably 0.0180% or less, more preferably 0.0005% or more, and more preferably 0.0060% or less.

REM: 0.0500% or less

Rare-earth metal (REM) is an element that forms an oxysulfide with high stability at high temperatures and thereby improves weldability. At a REM content of more than 0.0500%, however, the effects of adding REM are saturated and the effects cannot be commensurate with the REM content, which is economically disadvantageous. Thus, when REM is contained, the REM content is 0.0500% or less, preferably 0.0001% or more, and preferably 0.0450%, more preferably 0.0010% or more, and more preferably 0.0100% or less.

The chemical composition of the steel plate must satisfy the following additional conditions.

Relationship between Ceq and plate thickness t [mm]:

$$0.0004t + 0.25 \leq Ceq \leq 0.0004t + 0.45$$

Ceq defined by the following formula (1) is a measure of hardenability due to elements contained. To form a high-strength microstructure desired in the present invention, it is necessary to control the cooling rate depending on the thickness of the steel plate and the amount of alloy to be added depending on the thickness of the steel plate. Required strength cannot be achieved at Ceq of less than (0.0004 + 0.25). On the other hand, Ceq of more than (0.0004t + 0.45) results in excessively high strength at the surface of the steel plate, which has a higher cooling rate than the center of the thickness of the steel plate, and results in low bending workability. Thus, Ceq satisfies $0.0004t + 0.25 \leq Ceq \leq 0.0004t + 0.45$. Ceq is preferably (0.0004t + 0.27) or more and preferably (0.0004t + 0.43) or less, more preferably (0.0004t + 0.28) or more and (0.0004t + 0.42) or less.

$$Ceq = [C] + [Mn]/6 + ([Cr] + [Mo] + [V])/5 + ([Cu] + [Ni])/15 \quad (1)$$

Each element symbol in the formula (1) denotes the element content (% by mass) and is 0 in the absence of the element.

[Steel Microstructure]

In addition to having the chemical composition, a steel plate according to the present invention has a steel microstructure in which the dislocation density $\rho$ (m$^{-2}$) at a position 1 mm below a surface of the steel plate is $\rho \leq 4 \times 10^{14}$, the average grain size at the position 1 mm below the surface of the steel plate is 15 $\mu$m or less, and the average grain size at the center of the thickness of the steel plate is 20 $\mu$m or less. The following are the reasons for limiting the steel microstructure in the present invention as described above.

Dislocation density at the position 1 mm below the surface of the steel plate: $\rho \leq 4 \times 10^{14}$ (m$^{-2}$)

The bending workability of the steel plate depends on the ductility of the surface layer microstructure of the steel plate. An increase in the dislocation density of the surface layer microstructure due to processing strain during hot rolling results in a decrease in the deformation limit of the surface layer microstructure and in the bending workability. Thus, the dislocation density at the position 1 mm below the surface of the steel plate was set to $4 \times 10^{14}$ (m$^{-2}$) or less. In general, the steel microstructure inevitably has dislocations, and setting to $1 \times 10^{11}$ (m$^{-2}$) or less entails very high manufacturing costs. Thus, $1 \times 10^{11}$ or more is preferred, and $3 \times 10^{14}$ (m$^{-2}$) or less is preferred.

Average grain size at the position 1 mm below the surface of the steel plate: 15 $\mu$m or less

The toughness of the steel plate surface layer increases with decreasing grain size of the surface layer microstructure of the steel plate. To produce this effect, the average grain size at the position 1 mm below the surface of the steel plate must be 15 $\mu$m or less. Thus, the average grain size at the position 1 mm below the surface of the steel plate is set to 15 $\mu$m or less, preferably 13 $\mu$m or less, and preferably 4 $\mu$m or more.

Average grain size at the center of the thickness: 20 $\mu$m or less

The toughness at the center of the thickness of the steel plate increases with decreasing grain size of the steel microstructure at the center of the thickness of the steel plate. To produce this effect, the average grain size at the center of the thickness of the steel plate must be 20 $\mu$m or less. Thus, the average grain size at the center of the thickness of the steel plate was set to 20 $\mu$m or less, preferably 15 $\mu$m or less, and preferably 7 $\mu$m or more.

The phrase "1 mm below the surface of the steel plate", as used herein, refers to a position at a depth of 1 mm from the surface of the steel plate in the thickness direction. The phrase "the center of the thickness", as used herein,

refs to a position at half the thickness of the steel plate.

The term "average grain size", as used herein, refers to the average of all crystal grains at the position 1 mm below the surface of the steel plate and the average of all crystal grains at the center of the thickness of the steel plate, wherein each crystal grain is defined by a region surrounded by a boundary with a crystal orientation difference of 15 degrees or more. The average grain size can be determined by the method described later in the examples.

The term "steel plate", as used herein, refers to a steel plate with a thickness of 6 mm or more. The thickness of the steel plate is preferably more than 40 mm, more preferably 70 mm or more. The upper limit of the thickness is preferably, but not limited to, 190 mm or less.

[Manufacturing Method]

A method for manufacturing a steel plate according to an embodiment of the present invention is described below.

A steel plate according to the present invention can be manufactured by heating, hot rolling, and cooling a slab (steel material) with the above chemical composition under the conditions described above. The cooling may be followed by an optional tempering process.

The details are described below. In the following description of the manufacturing method, unless otherwise specified, the temperature expressed in "°C" is the surface temperature of a slab or steel plate or the temperature at the center of the thickness (at half the thickness) of the steel plate. The surface temperature can be measured with a radiation thermometer or the like, for example. The temperature at the center of the thickness of a slab or steel plate can be determined, for example, by measuring the temperature at the center of the thickness of the steel plate with a thermocouple or by calculating the temperature distribution in a cross section of the steel plate by heat transfer analysis and correcting the result by the surface temperature of the steel plate.

In the present invention, a slab can be melted by any method, for example, by a known melting method using a converter, an electric furnace, a vacuum melting furnace, or the like. A slab is produced in desired dimensions, for example, by a continuous casting process. The molten steel may be further subjected to secondary refining, such as ladle refining.

As described above, a slab thus produced is heated in the temperature range of 1000°C to 1200°C.

Heating temperature of slab: 1000°C to 1200°C

When the heating temperature of a slab is less than 1000°C, coarse NbC precipitated in the slab during slab casting is not redissolved and remains. Consequently, it is impossible to produce the effect of lowering the temperature in the non-recrystallization temperature range by solid solution Nb or fine NbC reprecipitated during hot rolling. This reduces the grain refining effect of controlled rolling and decreases the toughness. On the other hand, when the heating temperature of the slab is more than 1200°C, the grain growth of austenite increases the grain size at the beginning of hot rolling and accordingly increases the grain size of the final microstructure after the hot rolling and decreases the toughness. Thus, the heating temperature of the slab was set in the temperature range of 1000°C to 1200°C, preferably 1030°C or more, and preferably 1170°C or less.

The heated slab is then hot rolled. As described above, in the present invention, it is important to appropriately control the rolling conditions at the steel plate surface layer and at the center of the thickness of the steel plate during the hot rolling.

The temperature range above $(8250[Nb] + 770°C)$ at the position 1 mm below the surface of the steel plate or at the center of the thickness of the steel plate is herein referred to as a recrystallization temperature range, and the temperature range of $(8250[Nb] + 770°C)$ to $A_{r3}$ at the position 1 mm below the surface of the steel plate or at the center of the thickness of the steel plate is herein referred to as a non-recrystallization temperature range. The [Nb] denotes the Nb content (% by mass).

Rolling conditions at steel plate surface layer:

First, the steel plate temperature at the position 1 mm below the surface of the steel plate is once decreased to the $A_{r3}$ temperature or lower and is then increased above the $A_{c3}$ temperature by recuperation. Rolling reduction is then performed at a rolling reduction ratio of 25% or more at the position 1 mm below the surface of the steel plate in the temperature range in which the steel plate temperature at the position 1 mm below the surface of the steel plate ranges from $(8250[Nb] + 770°C)$ to the $A_{r3}$ temperature. Rolling reduction is then performed at a total rolling reduction ratio of 15% or less in the temperature range in which the steel plate temperature at the position 1 mm below the surface of the steel plate is below the $A_{r3}$ temperature.

The steel plate surface layer of the heated slab is once cooled to the $A_{r3}$ temperature or lower during the hot rolling to transform austenite to a low-temperature-formed microstructure, such as ferrite, and is then heated to the $A_{c3}$

temperature or higher by recuperation for retransformation into the austenite microstructure, thereby forming fine austenite in the steel plate surface layer.

The cooling is performed by any method, for example, by water cooling or air cooling, provided that the temperature can be controlled to a predetermined temperature. For example, cooling to the $A_{r3}$ temperature or lower is performed by water cooling, and the retention time at the $A_{r3}$ temperature or lower at the position 1 mm below the surface of the steel plate is preferably 5 seconds or more and preferably 300 seconds or less. The recuperation after the cooling is performed by holding the steel plate in the air, and the holding time is preferably 30 seconds or more and preferably 600 seconds or less.

Rolling reduction ratio in the temperature range of (8250[Nb] + 770°C) to the $A_{r3}$ temperature: 25% or more

Rolling reduction is then performed at a rolling reduction ratio of 25% or more in the temperature range in which the steel plate surface layer is in the non-recrystallization temperature range of (8250[Nb] + 770°C) to the $A_{r3}$ temperature to introduce processing strain into austenite in the steel plate surface layer. This acts as a transformation nucleus in the final cooling and forms a fine microstructure with high toughness. 30% or more is preferred. From the perspective of rolling efficiency, the rolling reduction ratio in this temperature range is preferably 80% or less, more preferably 70% or less.

The upper limit of the number of passes in this temperature range is not particularly limited. For example, a plurality of passes is possible, provided that the conditions for the rolling reduction ratio are satisfied.

Total rolling reduction ratio in the temperature range below the $A_{r3}$ temperature: 15% or less

When the total rolling reduction ratio at a steel plate surface layer temperature in the temperature range below the $A_{r3}$ temperature is more than 15%, processing strain is introduced into a ferrite microstructure or a pearlite microstructure completely transformed in the steel plate surface layer and reduces the ductility and bending workability. Thus, the total rolling reduction ratio at a steel plate surface layer temperature in the temperature range below the $A_{r3}$ temperature was set to 15% or less, preferably 6% or less.

The microstructure controlling under the rolling conditions of the steel plate surface layer described above can form a steel plate surface layer with a microstructure that simultaneously has a low dislocation density, a small grain size, and high bending workability and toughness.

Rolling conditions at the center of the thickness:

The center of the thickness of the steel plate is subjected to rolling reduction at a total rolling reduction ratio of 25% or more in the temperature range in which the steel plate temperature at the center of the thickness of the steel plate is (8250[Nb] + 770°C) or lower and the $A_{r3}$ temperature or higher.

Total rolling reduction ratio in the temperature range of (8250[Nb] + 770°C) or lower and the $A_{r3}$ temperature or higher: 25% or more

During the hot rolling under the rolling conditions of the steel plate surface layer, 25% or more rolling reduction of the heated slab at the center of the thickness of the steel plate in the non-recrystallization temperature range of (8250[Nb] + 770°C) to the $A_{r3}$ temperature introduces processing strain into austenite at the center of the thickness. This acts as a transformation nucleus in the final cooling and forms a fine microstructure with high toughness. Thus, the total rolling reduction ratio in the temperature range in which the temperature at the center of the thickness of the steel plate was (8250[Nb] + 770°C) or lower was set to 25% or more, preferably 35% or more. From the perspective of rolling efficiency, the total rolling reduction ratio in this temperature range is preferably 70% or less, more preferably 67% or less.

Below the $A_{r3}$ temperature at the center of the thickness of the steel plate, processing strain is introduced into ferrite formed and decreases the toughness. Thus, the $A_{r3}$ temperature or higher is preferred.

In the present invention, the temperature ranges in two types of rolling, "rolling of the steel plate surface layer" and "rolling of the center of the thickness of the steel plate", may overlap under the rolling conditions. In such a case, it is sufficient if the rolling reduction in the overlapping temperature range is cumulated as the rolling reduction in each of "the steel plate surface layer" and "the center of the thickness of the steel plate" is within the rolling conditions.

The total rolling reduction ratio in the recrystallization temperature range at the steel plate surface layer and at the center of the thickness of the steel plate is calculated by total rolling reduction ratio = $(r_0 - r_1)/r_0 \times 100$ (%) in the temperature range above (8250[Nb] + 770°C), wherein $r_0$ denotes the thickness at which the first rolling is started, and $r_1$ denotes the thickness after the final rolling.

The $A_{r3}$ temperature and the $A_{c3}$ temperature can be determined in a Formaster test or the like.

The microstructure controlling under the rolling conditions at the center of the thickness of the steel plate described above can form a microstructure with a small grain size and high toughness at the center position of the steel plate.

After the hot rolling, the steel plate is cooled. The steel plate is cooled at an average cooling rate of $2500 \times t^{-1.7}$°C/s or more in the temperature range of 700°C to 550°C at the center of the thickness of the steel plate, wherein t [mm] denotes the thickness of the steel plate. The cooling method may be water cooling by which water is ejected from a nozzle at a high flow rate. In the present invention, a cooling operation (treatment) is preferably performed on both sides of the steel plate such that both sides of the steel plate are cooled under the same conditions.

Average cooling rate in the temperature range of 700°C to 550°C at the center of the thickness of the steel plate: $2500 \times t^{-1.7}$°C/s or more

When the average cooling rate in the temperature range of 700°C to 550°C at the center of the thickness of the steel plate after the hot rolling is below $2500 \times t^{-1.7}$°C/s, the strength desired in the present invention cannot be achieved due to an insufficient cooling rate in the temperature range in which austenite is transformed to a low-temperature transformation microstructure, and the toughness decreases due to the formation of coarse ferrite. Thus, the average cooling rate in the temperature range of 700°C to 550°C at the center of the thickness of the steel plate was set to $2500 \times t^{-1.7}$°C/s or more, preferably $2800 \times t^{-1.7}$°C/s or more, and preferably $15000 \times t^{-1.7}$°C/s or less.

In the present invention, if necessary, the cooling can be followed by tempering to further improve the strength and toughness. In such a case, after the cooling, the steel plate is tempered at a tempering temperature of 650°C or less.

Tempering temperature: 650°C or less

At a tempering temperature above 650°C, the required strength may not be achieved due to significant softening. Thus, the tempering temperature is preferably 650°C or less. The lower limit of the tempering temperature is preferably, but not limited to, 200°C or more. The tempering time can be appropriately adjusted. The term "tempering temperature", as used herein, refers to the temperature of the surface of the steel plate. 250°C or more is more preferred, and 630°C or less is more preferred.

EXAMPLES

The present invention is more specifically described in the following examples. It should be noted that the following examples are preferred examples of the present invention, and the present invention is not limited to these examples.

First, molten steel with the chemical composition shown in Table 1 was obtained by steelmaking to produce a steel material (slab) by continuous casting or the like. Blanks in Table 1 represent no intentional addition and include not only additive-free (0%) but also incidental inclusion.

The slab was then sequentially subjected to heating, hot rolling, and cooling processes to manufacture a steel plate with a thickness t (mm) shown in Table 2. Some of the steel plates were reheated for tempering after the cooling. Table 2 shows manufacturing conditions in each process.

Before surface-layer-controlled rolling, cooling was performed by water cooling when the temperature at the position 1 mm below the surface of the steel plate was once decreased to the $A_{r3}$ temperature or lower, and the retention time during the cooling at the $A_{r3}$ temperature or lower at the position 1 mm below the surface of the steel plate was 5 seconds or more. The steel plate after the cooling was held in the air for recuperation. Cooling after the hot rolling was performed by spraying water at a high flow rate on the top and bottom sides of the steel plate. The surface layer temperature of the steel plate was measured with a radiation thermometer. The temperature at the center of the thickness of the steel plate was measured by attaching a thermocouple to the center of the thickness of the steel plate. In the examples shown in Table 2, the rolling start temperature ranged from 990°C to 1140°C in the steel plate surface layer, and the rolling finish temperature ranged from 670°C to 830°C in the steel plate surface layer.

The steel plates thus manufactured were subjected to the measurement of dislocation density, average grain size, $A_{r3}$ temperature, and $A_{c3}$ temperature, and to a tensile test, a Charpy impact absorption test, and a bending test by the following methods. Table 3 shows the measurement and test results.

[Measurement of Dislocation Density]

Samples were taken such that the test surface was located at the middle position in the longitudinal direction and the width direction of each steel plate and at the position 1 mm below the surface of the steel plate. A surface of each sample was mirror-polished by mechanical polishing and electropolishing. The dislocation density was measured with an X-ray diffractometer by a Williamson-Hall method (reference 1).
(Reference 1) G.K. Williams and W.H. Hall: Acta Metall., 1 (1953), 22

[Average Grain Size]

Samples were taken from each steel plate such that the test surface was a longitudinal cross section located at the middle position in the longitudinal direction and the width direction of the steel plate and at the position 1 mm below the surface of the steel plate or at the center of the thickness of the steel plate. A surface of each sample was mirror-polished with colloidal silica finishing and was examined by a backscattered electron diffraction method (EBSP) under the following conditions. The measurement area was 300 $\mu$m $\times$ 400 $\mu$m, and the measurement step size was 1 $\mu$m. The equivalent circular diameter of a microstructure surrounded by a high-angle grain boundary with a crystal orientation difference of 15 degrees or more from an adjacent crystal grain was determined from a crystal orientation map thus obtained. The average of the equivalent circular diameters in the measurement area was defined as the average grain size. The steel plate surface layer and the center of the thickness of the steel plate of each example have a microstructure composed mainly of bainite or quasi-polygonal ferrite.

[Measurement of $A_{r3}$ Temperature and $A_{c3}$ Temperature]

Formaster test specimens were taken from each slab at a 1/4t thickness position. In the Formaster test, the $A_{c3}$ temperature in the course of heating from room temperature to 1000°C at 10°C/s and the $A_{r3}$ temperature in the course of cooling from 1000°C to room temperature at 0.1°C/s were measured in the Formaster test specimens and were used for evaluation.

[Tensile Test]

Tensile test specimens were taken from the center of the thickness (half the thickness) of each steel plate at the middle position in the longitudinal direction and the width direction of the steel plate such that the longitudinal direction of each tensile test specimen was parallel to the rolling direction of the steel plate. The YS and TS of the tensile test specimens were then measured in a tensile test according to JIS Z 2241 (2011). The tensile test specimens had a JIS No. 4 shape.

[Charpy Impact Absorption Test]

Charpy impact test specimens were taken from each steel plate at the middle position in the longitudinal direction and the width direction of the steel plate. The Charpy impact test specimens were taken at the position 1 mm below the surface of the steel plate and at the center of the thickness (at half the thickness) such that the longitudinal direction of each Charpy impact test specimen was parallel to the width direction of the steel plate. The impact absorbed energy of each Charpy impact test specimen was then determined by a Charpy impact absorption test according to JIS Z 2242 (2018). The Charpy impact test specimens were V-notched standard test specimens. The average of the results of three Charpy impact test specimens tested at -40°C was used for evaluation.

[Bending Test]

Test specimens were taken from each steel plate at the middle position in the longitudinal direction and the width direction of the steel plate. Test specimens 12 mm in thickness, 50 mm in width, and 350 mm in length were taken from the outermost surface to a position 12 mm below the surface layer of the steel plate such that the longitudinal direction of each bending test specimen was parallel to the width direction of the steel plate. The test specimens were then subjected to a three-point bending test according to JIS Z 2248 (2006).
180-degree bending was performed with a punch with a bend radius of 12 mm in the direction in which the outermost surface of the steel plate became the outside in the bending, and cracking was examined.

[Table 1]

| Steel grade | Chemical composition (mass%) *1 | | | | | | | | | | | | | | | | | | | | Ceq. | Notes |
|---|---|---|---|---|---|---|---|---|---|---|---|---|---|---|---|---|---|---|---|---|---|---|
| | C | Si | Mn | P | S | Nb | Al | O | N | Cu | Ni | Cr | Mo | Ti | V | W | B | Ca | Mg | REM | | |
| A | 0.06 | 0.46 | 1.38 | 0.003 | 0.0124 | 0.027 | 0.021 | 0.0018 | 0.0052 | | | | | | | | | | | | 0.29 | Example |
| B | 0.12 | 0.19 | 1.84 | 0.018 | 0.0046 | 0.012 | 0.065 | 0.0061 | 0.0020 | | | | | | | | | | | | 0.43 | Example |
| C | 0.09 | 0.06 | 2.31 | 0.007 | 0.0012 | 0.031 | 0.009 | 0.0042 | 0.0012 | | | | | | | | | | | | 0.48 | Example |
| D | 0.07 | 0.28 | 1.90 | 0.022 | 0.0008 | 0.024 | 0.018 | 0.0025 | 0.0040 | | | | | | | | | | | | 0.39 | Example |
| E | 0.10 | 0.62 | 1.25 | 0.011 | 0.0152 | 0.026 | 0.033 | 0.0038 | 0.0031 | | | | | | | | | | | | 0.31 | Example |
| F | 0.08 | 0.35 | 1.46 | 0.006 | 0.0031 | 0.019 | 0.052 | 0.0012 | 0.0073 | | | | | | | | | | | | 0.32 | Example |
| G | 0.09 | 0.27 | 1.16 | 0.018 | 0.0028 | 0.013 | 0.029 | 0.0022 | 0.0017 | 0.52 | | | | | | | | | | | 0.32 | Example |
| H | 0.11 | 0.13 | 1.68 | 0.004 | 0.0015 | 0.022 | 0.018 | 0.0027 | 0.0041 | | 0.83 | | | | | | | | | | 0.45 | Example |
| I | 0.08 | 0.54 | 0.93 | 0.006 | 0.0041 | 0.035 | 0.074 | 0.0038 | 0.0051 | | | 0.68 | | | | | | | | | 0.37 | Example |
| J | 0.13 | 0.47 | 0.65 | 0.005 | 0.0025 | 0.015 | 0.020 | 0.0031 | 0.0080 | | | | 0.39 | | | | | | | | 0.32 | Example |
| K | 0.11 | 0.21 | 2.07 | 0.018 | 0.0115 | 0.032 | 0.031 | 0.0052 | 0.0038 | | | | | 0.026 | | | | | | | 0.46 | Example |
| L | 0.07 | 0.38 | 1.21 | 0.025 | 0.0084 | 0.008 | 0.021 | 0.0017 | 0.0028 | | | | | | 0.07 | | | | | | 0.29 | Example |
| M | 0.06 | 0.63 | 1.63 | 0.010 | 0.0045 | 0.007 | 0.063 | 0.0048 | 0.0007 | | | | | | | 0.26 | | | | | 0.33 | Example |
| N | 0.09 | 0.08 | 1.93 | 0.005 | 0.0028 | 0.028 | 0.040 | 0.0036 | 0.0028 | | | | | | | | 0.0018 | | | | 0.41 | Example |
| O | 0.12 | 0.25 | 2.18 | 0.008 | 0.0018 | 0.022 | 0.028 | 0.0045 | 0.0061 | | | | | | | | | 0.0023 | | | 0.48 | Example |
| P | 0.10 | 0.18 | 1.76 | 0.017 | 0.0031 | 0.028 | 0.038 | 0.0059 | 0.0032 | | | | | | | | | | 0.0031 | | 0.39 | Example |
| Q | 0.09 | 0.52 | 1.61 | 0.022 | 0.0057 | 0.033 | 0.015 | 0.0021 | 0.0015 | | | | | | | | | | | 0.0084 | 0.36 | Example |
| R | 0.08 | 0.36 | 1.28 | 0.009 | 0.0015 | 0.024 | 0.029 | 0.0054 | 0.0039 | 0.35 | 1.39 | | | 0.008 | | | 0.0012 | | | | 0.41 | Example |
| S | 0.10 | 0.19 | 1.45 | 0.006 | 0.0034 | 0.013 | 0.028 | 0.0035 | 0.0036 | | 0.56 | 0.42 | 0.13 | | 0.05 | | | | | 0.0058 | 0.50 | Example |
| T | 0.06 | 0.47 | 1.45 | 0.015 | 0.0008 | 0.033 | 0.067 | 0.0019 | 0.0015 | 0.23 | | | | 0.015 | 0.04 | | | | 0.0026 | | 0.33 | Example |
| U | 0.08 | 0.25 | 0.79 | 0.016 | 0.0075 | 0.030 | 0.036 | 0.0054 | 0.0039 | | | 0.23 | 0.25 | 0.032 | | 0.13 | | | | | 0.31 | Example |
| V | 0.11 | 0.39 | 1.39 | 0.015 | 0.0028 | 0.021 | 0.015 | 0.0033 | 0.0041 | 0.86 | 0.28 | | | | 0.13 | | | 0.0041 | | | 0.44 | Example |
| W | 0.10 | 0.18 | 1.21 | 0.056 | 0.0015 | 0.014 | 0.041 | 0.0018 | 0.0052 | | | | | | | | | | | | 0.30 | Comparative example |
| X | 0.08 | 0.50 | 1.73 | 0.007 | 0.0352 | 0.028 | 0.062 | 0.0025 | 0.0036 | | | | | | | | | | | | 0.37 | Comparative example |
| Y | 0.07 | 0.31 | 2.25 | 0.015 | 0.0024 | 0.030 | 0.156 | 0.0051 | 0.0064 | | | | | | | | | | | | 0.45 | Comparative example |
| Z | 0.10 | 0.13 | 1.40 | 0.009 | 0.0005 | 0.024 | 0.045 | 0.0184 | 0.0052 | | | | | | | | | | | | 0.33 | Comparative example |
| AA | 0.13 | 0.28 | 1.58 | 0.008 | 0.0014 | 0.016 | 0.036 | 0.0018 | 0.0161 | | | | | | | | | | | | 0.39 | Comparative example |

*1: The remainder is composed of Fe and incidental impurities.

*2: Ceq=[C]+[Mn]/6+([Cr]+[Mo]+[V])/5+([Cu]+[Ni])/15, wherein each element symbol denotes the corresponding element content (mass%) and is 0 in the absence of the element.

*3: Blanks represent no intentional addition and include not only additive-free (0%) but also incidental inclusion.

[Table 2]

| No | Steel grade | Thickness t (mm) | Ceq | 0.0004t+0.25 | 0.0004t+0.45 | Slab heating temperature (°C) | Before surface-layer-controlled rolling, once cooling to $A_{r3}$ temperature or lower at a position 1 mm below the surface of a steel plate, and then heating to $A_{c3}$ temperature or higher by recuperation | Rolling reduction ratio in the temperature range in which the temperature at a position 1 mm below the surface of a steel plate ranges from (8250[Nb]+770°C) to $A_{r3}$ temperature (%) | Total rolling reduction ratio when the temperature at a position 1 mm below the surface of a steel plate is below $A_{r3}$ temperature (%) | Total rolling reduction ratio in the temperature range in which the temperature of the center of the thickness of a steel plate ranges from (8250[Nb]+770°C) or lower and $A_{r3}$ temperature or higher (%) | Average cooling rate at the center of the thickness of a steel plate between 700°C and 550°C (°C/s) | $2500 \times t^{-1.7}$ | Tempering temperature (°C) |
|---|---|---|---|---|---|---|---|---|---|---|---|---|---|
| 1 | A | 75 | 0.29 | 0.28 | 0.48 | 1050 | ◯ | 53 | 0 | 39 | 3.5 | 16 | - |
| 2 | B | 110 | 0.43 | 0.29 | 0.49 | 1120 | ◯ | 68 | 0 | 51 | 2.2 | 0.8 | - |
| 3 | C | 175 | 0.48 | 0.32 | 0.52 | 1090 | ◯ | 45 | 6 | 31 | 0.8 | 0.4 | 550 |
| 4 | D | 120 | 0.39 | 0.30 | 0.50 | 1180 | ◯ | 29 | 8 | 27 | 19 | 0.7 | - |
| 5 | E | 51 | 0.31 | 0.27 | 0.47 | 1030 | ◯ | 70 | 6 | 52 | 11.5 | 31 | - |
| 6 | F | 90 | 0.32 | 0.29 | 0.49 | 1070 | ◯ | 46 | 0 | 40 | 2.8 | 1.2 | - |
| 7 | G | 70 | 0.32 | 0.28 | 0.48 | 1130 | ◯ | 54 | 0 | 37 | 40 | 1.8 | - |
| 8 | H | 60 | 0.45 | 0.27 | 0.47 | 1120 | ◯ | 58 | 0 | 53 | 9.8 | 2.4 | 450 |
| 9 | I | 140 | 0.37 | 0.31 | 0.51 | 1100 | ◯ | 40 | 0 | 32 | 1.6 | 0.6 | - |
| 10 | J | 65 | 0.32 | 0.28 | 0.48 | 1070 | ◯ | 65 | 4 | 55 | 76 | 21 | - |
| 11 | K | 180 | 0.46 | 0.32 | 0.52 | 1120 | ◯ | 69 | 0 | 52 | 0.6 | 0.4 | 410 |
| 12 | L | 55 | 0.29 | 0.27 | 0.47 | 1170 | ◯ | 62 | 0 | 40 | 11.5 | 2.7 | - |
| 13 | M | 40 | 0.33 | 0.27 | 0.47 | 1060 | ◯ | 71 | 0 | 52 | 153 | 4.7 | - |
| 14 | N | 83 | 0.41 | 0.28 | 0.48 | 1100 | ◯ | 39 | 0 | 28 | 5.6 | 1.4 | - |

(continued)

| No | Steel grade | Thickness t (mm) | Ceq | 0.0004t+0.25 | 0.0004t+0.45 | Slab heating temperature (°C) | Before surface-layer-controlled rolling, once cooling to $A_{r3}$ temperature or lower at a position 1 mm below the surface of a steel plate, and then heating to $A_{c3}$ temperature or higher by recuperation | Rolling reduction ratio in the temperature range in which the temperature at a position 1 mm below the surface of a steel plate ranges from (8250[Nb]+770°C) to $A_{r3}$ temperature (%) | Total rolling reduction ratio when the temperature at a position 1 mm below the surface of a steel plate is below $A_{r3}$ temperature (%) | Total rolling reduction ratio in the temperature range in which the temperature of the center of the thickness of a steel plate ranges from (8250[Nb]+770°C) or lower and $A_{r3}$ temperature or higher (%) | Average cooling rate at the center of the thickness of a steel plate between 700°C and 550°C (°C/s) | 2500×$t^{1.7}$ | Tempering temperature (°C) |
|---|---|---|---|---|---|---|---|---|---|---|---|---|---|
| 15 | O | 85 | 0.48 | 0.28 | 0.48 | 1120 | ○ | 42 | 0 | 29 | 2.8 | 1.3 | 470 |
| 16 | P | 110 | 0.39 | 0.29 | 0.49 | 1030 | ○ | 48 | 0 | 33 | 20 | 0.8 | - |
| 17 | Q | 120 | 0.36 | 0.30 | 0.50 | 1170 | ○ | 35 | 0 | 32 | 1.7 | 0.7 | - |
| 18 | R | 163 | 0.41 | 0.32 | 0.52 | 1130 | ○ | 86 | 6 | 67 | 0.9 | 0.4 | - |
| 19 | S | 150 | 0.50 | 0.31 | 0.51 | 1110 | ○ | 35 | 6 | 33 | 10 | 0.5 | 480 |
| 20 | T | 94 | 0.33 | 0.29 | 0.49 | 1100 | ○ | 42 | 0 | 35 | 26 | 1.1 | - |
| 21 | U | 76 | 0.31 | 0.28 | 0.48 | 1090 | ○ | 53 | 0 | 39 | 3.4 | 1.6 | - |
| 22 | V | 70 | 0.44 | 0.28 | 0.48 | 1080 | ○ | 59 | 0 | 52 | 40 | 1.8 | 510 |
| 23 | W | 64 | 0.30 | 0.28 | 0.48 | 1120 | ○ | 39 | 0 | 33 | 80 | 21 | - |
| 24 | X | 58 | 0.37 | 0.27 | 0.47 | 1130 | ○ | 46 | 0 | 40 | 10.4 | 2.5 | - |
| 25 | Y | 90 | 0.45 | 0.29 | 0.49 | 1160 | ○ | 52 | 0 | 43 | 3.3 | 1.2 | 580 |
| 26 | Z | 45 | 0.33 | 0.27 | 0.47 | 1080 | ○ | 63 | 9 | 55 | 13.2 | 3.9 | - |
| 27 | AA | 160 | 0.39 | 0.31 | 0.51 | 1050 | ○ | 38 | 0 | 31 | 0.8 | 0.4 | - |
| 28 | C | 30 | 0.48 | 0.26 | 0.46 | 1120 | ○ | 43 | 0 | 35 | 23.5 | 7.7 | - |

(continued)

| No | Steel grade | Thickness t (mm) | Ceq | 0.0004t+0.25 | 0.0004t+0.45 | Slab heating temperature (°C) | Before surface-layer-controlled rolling, once cooling to $A_{r3}$ temperature or lower at a position 1 mm below the surface of a steel plate, and then heating to $A_{c3}$ temperature or higher by recuperation | Rolling reduction ratio in the temperature range in which the temperature at a position 1 mm below the surface of a steel plate ranges from (8250[Nb]+770°C) to $Ar_3$ temperature (%) | Total rolling reduction ratio when the temperature at a position 1 mm below the surface of a steel plate is below $A_{r3}$ temperature (%) | Total rolling reduction ratio in the temperature range in which the temperature of the center of the thickness of a steel plate ranges from (8250[Nb]+770°C) or lower and $A_{r3}$ temperature or higher (%) | Average cooling rate at the center of the thickness of a steel plate between 700°C and 550°C (°C/s) | $2500 \times t^{-1.7}$ | Tempering temperature (°C) |
|---|---|---|---|---|---|---|---|---|---|---|---|---|---|
| 29 | E | 190 | 0.31 | 0.33 | 0.53 | 1140 | ○ | 36 | 0 | 29 | 0.7 | 0.3 | - |
| 30 | O | 35 | 0.48 | 0.26 | 0.46 | 1080 | ○ | 50 | 6 | 45 | 20.3 | 59 | - |
| 31 | L | 165 | 0.29 | 0.32 | 0.52 | 1110 | ○ | 39 | 0 | 30 | 0.8 | 0.4 | - |
| 32 | M | 75 | 0.33 | 0.28 | 0.48 | 920 | ○ | 35 | 0 | 28 | 33 | 1.6 | - |
| 33 | R | 63 | 0.41 | 0.28 | 0.48 | 1280 | ○ | 42 | 0 | 32 | 69 | 2.2 | - |
| 34 | G | 83 | 0.32 | 0.28 | 0.48 | 1110 | × | 33 | 0 | 28 | 30 | 1.4 | - |
| 35 | B | 63 | 0.43 | 0.28 | 0.48 | 1050 | ○ | 19 | 0 | 13 | 6.5 | 2.2 | - |
| 36 | H | 121 | 0.45 | 0.30 | 0.50 | 1130 | ○ | 37 | 35 | 42 | 1.5 | 0.7 | - |
| 37 | O | 150 | 0.48 | 0.31 | 0.51 | 1030 | × | 38 | 5 | 33 | 0.9 | 0.5 | - |
| 38 | C | 175 | 0.48 | 0.32 | 0.52 | 1090 | ○ | 14 | 0 | 10 | 0.6 | 0.4 | - |
| 39 | P | 81 | 0.39 | 0.28 | 0.48 | 1080 | ○ | 35 | 26 | 40 | 2.8 | 1.4 | - |
| 40 | T | 96 | 0.33 | 0.29 | 0.49 | 1120 | ○ | 48 | 0 | 39 | 0.1 | 1.1 | - |
| 41 | A | 49 | 0.29 | 0.27 | 0.47 | 1080 | ○ | 53 | 6 | 40 | 0.1 | 3.3 | - |

[Table 3]

| No. | Steel grade | Dislocation density $\rho$ at a position 1 mm below the surface of a steel plate ($10^{14}$/m$^{-2}$) | Average grain size at a position 1 mm below the surface of a steel plate | Average grain size at the center of the thickness of a steel plate ($\mu$m) | YS at the center of the thickness of a steel plate (MPa) | TS at the center of the thickness of a steel plate (MPa) | Charpy absorbed energy at the position 1 mm below the surface of a steel plate (J) | Charpy absorbed energy at the center of the thickness of a steel plate (J) | Cracking in bending test | Evaluation |
|---|---|---|---|---|---|---|---|---|---|---|
| 1 | A | 0.9 | 8 | 15 | 328 | 469 | 354 | 302 | No | Example |
| 2 | B | 0.7 | 7 | 11 | 458 | 563 | 305 | 256 | No | Example |
| 3 | C | 1.5 | 11 | 13 | 407 | 518 | 308 | 253 | No | Example |
| 4 | D | 1.8 | 12 | 16 | 361 | 493 | 337 | 156 | No | Example |
| 5 | E | 1.5 | 6 | 13 | 328 | 458 | 361 | 298 | No | Example |
| 6 | F | 0.8 | 9 | 14 | 346 | 470 | 326 | 189 | No | Example |
| 7 | G | 0.6 | 10 | 12 | 368 | 513 | 337 | 285 | No | Example |
| 8 | H | 1.8 | 9 | 11 | 556 | 663 | 258 | 206 | No | Example |
| 9 | I | 1.1 | 10 | 15 | 380 | 513 | 315 | 207 | No | Example |
| 10 | J | 1.3 | 8 | 13 | 349 | 520 | 328 | 262 | No | Example |
| 11 | K | 0.7 | 7 | 12 | 439 | 532 | 336 | 229 | No | Example |
| 12 | L | 0.6 | 8 | 15 | 374 | 529 | 361 | 285 | No | Example |
| 13 | M | 0.9 | 6 | 11 | 408 | 517 | 347 | 259 | No | Example |
| 14 | N | 1.4 | 11 | 17 | 451 | 576 | 286 | 152 | No | Example |
| 15 | O | 1.6 | 8 | 15 | 553 | 654 | 223 | 186 | No | Example |
| 16 | P | 1.1 | 10 | 15 | 437 | 543 | 318 | 205 | No | Example |
| 17 | Q | 1.0 | 11 | 16 | 379 | 528 | 342 | 234 | No | Example |
| 18 | R | 1.9 | 6 | 12 | 423 | 557 | 305 | 285 | No | Example |
| 19 | S | 1.9 | 7 | 15 | 508 | 609 | 316 | 225 | No | Example |
| 20 | T | 0.8 | 9 | 16 | 364 | 518 | 351 | 257 | No | Example |
| 21 | U | 0.6 | 8 | 14 | 381 | 531 | 384 | 291 | No | Example |

17

(continued)

| No. | Steel grade | Dislocation density ρ at a position 1 mm below the surface of a steel plate (10^14/m^{-2}) | Average grain size at a position 1 mm below the surface of a steel plate | Average grain size at the center of the thickness of a steel plate (μm) | YS at the center of the thickness of a steel plate (MPa) | TS at the center of the thickness of a steel plate (MPa) | Charpy absorbed energy at the position 1 mm below the surface of a steel plate (J) | Charpy absorbed energy at the center of the thickness of a steel plate (J) | Cracking in bending test | Evaluation |
|---|---|---|---|---|---|---|---|---|---|---|
| 22 | V | 1.5 | 7 | 11 | 529 | 620 | 284 | 240 | No | Example |
| 23 | W | 0.7 | 11 | 13 | 361 | 542 | 138 | 22 | No | Comparative example |
| 24 | X | 1.2 | 8 | 15 | 445 | 517 | 152 | 13 | No | Comparative example |
| 25 | Y | 1.5 | 10 | 14 | 471 | 576 | 174 | 58 | Yes | Comparative example |
| 26 | Z | 2.0 | 8 | 12 | 370 | 521 | 138 | 64 | Yes | Comparative example |
| 27 | AA | 1.2 | 12 | 17 | 394 | 547 | 155 | 78 | Yes | Comparative example |
| 28 | C | 4.3 | 10 | 15 | 561 | 648 | 184 | 80 | Yes | Comparative example |
| 29 | E | 0.9 | 12 | 17 | 286 | 380 | 351 | 289 | No | Comparative example |
| 30 | O | 4.6 | 8 | 14 | 549 | 638 | 201 | 138 | Yes | Comparative example |
| 31 | L | 0.8 | 12 | 17 | 280 | 391 | 364 | 301 | No | Comparative example |
| 32 | M | 0.9 | 13 | 24 | 383 | 539 | 225 | 36 | No | Comparative example |
| 33 | R | 1.2 | 22 | 28 | 431 | 564 | 49 | 33 | No | Comparative example |
| 34 | G | 1.0 | 18 | 19 | 384 | 549 | 51 | 66 | No | Comparative example |

| No. | Steel grade | Dislocation density ρ at a position 1 mm below the surface of a steel plate ($10^{14}/m^{-2}$) | Average grain size at a position 1 mm below the surface of a steel plate | Average grain size at the center of the thickness of a steel plate (μm) | YS at the center of the thickness of a steel plate (MPa) | TS at the center of the thickness of a steel plate (MPa) | Charpy absorbed energy at the position 1 mm below the surface of a steel plate (J) | Charpy absorbed energy at the center of the thickness of a steel plate (J) | Cracking in bending test | Evaluation |
|---|---|---|---|---|---|---|---|---|---|---|
| 35 | B | 0.9 | 25 | 29 | 471 | 598 | 53 | 39 | No | Comparative example |
| 36 | H | 4.5 | 11 | 16 | 452 | 568 | 89 | 153 | Yes | Comparative example |
| 37 | O | 1.4 | 16 | 19 | 439 | 528 | 55 | 69 | No | Comparative example |
| 38 | C | 0.8 | 26 | 25 | 462 | 581 | 50 | 26 | No | Comparative example |
| 39 | P | 4.1 | 12 | 16 | 438 | 528 | 255 | 194 | Yes | Comparative example |
| 40 | T | 0.7 | 22 | 26 | 291 | 385 | 57 | 42 | No | Comparative example |
| 41 | A | 0.6 | 20 | 25 | 276 | 378 | 55 | 50 | No | Comparative example |

EP 4 032 992 B1

The results in Table 3 show that the steel plates with a very large thickness up to 180 mm satisfying the conditions of the present invention simultaneously had high strength at the center of the thickness of each steel plate, high toughness at the surface of the steel plate and at the center of the thickness of the steel plate, and high bending workability. In contrast, the steel plates according to the comparative examples not satisfying the conditions of the present invention had low strength, toughness, or bending workability.

For example, the steel plate of No. 23 has a high P content and is therefore brittle and has low toughness.

The steel plate of No. 24 has a high S content and is therefore brittle and has low toughness.

The steel plate of No. 25 has a high Al content and therefore has low ductility and bending workability. The steel plate also has low toughness.

The steel plate of No. 26 has a high O content and therefore has low ductility and bending workability.

The steel plate of No. 27 has a high N content and therefore has low ductility and bending workability.

The steel plates of Nos. 28 and 30 have a high Ceq with respect to their thicknesses. Thus, the microstructure of the surface of each steel plate with a high cooling rate is composed mainly of bainite with a high dislocation density and low ductility. Thus, the steel plates have low bending workability.

The steel plates of Nos. 29 and 31 have a low Ceq with respect to their thicknesses and therefore have low strength at the center of the thickness of each steel plate.

The steel plate of No. 32 has a low slab heating temperature. Thus, Nb with a recrystallization inhibiting effect remains undissolved as precipitates, which results in controlled rolling with a small grain refining effect. The steel plate also has low toughness.

The steel plate of No. 33 has a high slab heating temperature and therefore has a large grain size at the beginning of rolling and also has a large grain size in the final microstructure, which results in low toughness.

In the steel plates of Nos. 34 and 37, without temporary transformation to a low-temperature microstructure or subsequent reverse transformation due to recuperation before the controlled rolling of the surface layer, the surface layer has insufficient grain refinement. Thus, the surface layer has low toughness.

The steel plates of Nos. 35 and 38 have low toughness due to insufficient rolling reduction in the non-recrystallization region and coarse microstructure.

In the steel plates of Nos. 36 and 39, due to large rolling reduction at a surface layer temperature below the $A_{r3}$ temperature, the surface layer had a microstructure with high processing strain. Thus, the steel plates have low bending workability.

The steel plates of Nos. 40 and 41 have a low cooling rate with respect to their thicknesses and therefore have low strength. The steel plates also have low toughness.

**Claims**

1. A steel plate with a chemical composition comprising, on a mass percent basis:

    C: 0.04% to 0.14%;
    Si: 0.03% to 0.70%;
    Mn: 0.30% to 2.50%;
    P: 0.030% or less;
    S: 0.0200% or less;
    Nb: 0.001% to 0.100%;
    Al: 0.001% to 0.100%;
    O: 0.01% or less; and
    N: 0.01% or less,
    optioanlly, on a mass percent basis,
    one or two or more selected from the group consisting of
    Cu: 2.00% or less,
    Ni: 2.50% or less,
    Cr: 1.50% or less,
    Mo: 1.00% or less,
    Ti: 0.100% or less,
    V: 0.30% or less,
    B: 0.0100% or less,
    W: 0.50% or less,
    Ca: 0.0200% or less,
    Mg: 0.0200% or less, and

REM: 0.0500% or less

the remainder being Fe and incidental impurities,

wherein Ceq defined by the following formula (1) and a thickness t [mm] of the steel plate satisfy $0.0004t + 0.25 \leq Ceq \leq 0.0004t + 0.45$,

a microstructure of the steel plate has a dislocation density $\rho$ [m$^{-2}$J of $\rho \leq 4 \times 10^{14}$ at a position 1 mm below a surface of the steel plate,

an average grain size at the position 1 mm below the surface of the steel plate is 15 $\mu$m or less, and

an average grain size at a center of a thickness of the steel plate is 20 $\mu$m or less,

$$Ceq = [C] + [Mn]/6 + ([Cr] + [Mo] + [V])/5 + ([Cu] + [Ni])/15 \quad (1)$$

wherein each element symbol in the formula (1) denotes the corresponding element content, by mass%, and is 0 in the absence of the element, and wherein

the steel plate has a yield strength YS of 300 MPa or more, a tensile strength TS of 400 MPa or more and a Charpy impact absorbed energy of 60 J or more, the YS and TS are measured according to JIS Z 2241 (2011) and the Charpy value is measured according to JIS Z 2242 (2018), whereby the dislocation density is measured according to the description.

2. A method for manufacturing the steel plate according to Claim 1, comprising:

heating a slab with the chemical composition in the temperature range of 1000°C to 1200°C;

during hot rolling of the heated slab

once decreasing a slab temperature at the position 1 mm below the surface of the slab to an A$_{r3}$ temperature or lower and then increasing the slab temperature above an A$_{c3}$ temperature by recuperation;

performing rolling reduction at a rolling reduction ratio of 25% or more in a temperature range in which a steel plate temperature at the position 1 mm below the surface of the steel plate ranges from (8250[Nb] + 770°C) to the A$_{r3}$ temperature, subsequently performing rolling reduction at a total rolling reduction ratio of 15% or less in a temperature range in which the steel plate temperature at the position 1 mm below the steel plate surface layer is below the A$_{r3}$ temperature, and performing rolling reduction at a total rolling reduction ratio of 25% or more in a temperature range in which the steel plate temperature at the center of the thickness of the steel plate is (8250[Nb] + 770°C) or lower and the A$_{r3}$ temperature or higher, and

after the hot rolling, performing cooling at an average cooling rate of $2500 \times t^{-1.7}$°C/s or more in a temperature range of 700°C to 550°C at the center of the thickness of the steel plate, wherein t [mm] denotes the thickness of the steel plate,

wherein [Nb] denotes the Nb content (% by mass), and

wherein the A$_{r3}$ temperature is measured utilizing the method described in the description.

3. The method for manufacturing a steel plate according to Claim 2, further comprising, after the cooling, tempering is performed at a tempering temperature of 650°C or less.

**Patentansprüche**

1. Stahlblech mit einer chemischen Zusammensetzung, die auf Basis von Massenprozent umfasst:

C: 0,04 % bis 0,14 %,

Si: 0,03 % bis 0,70 %,

Mn: 0,30 % bis 2,50 %,

P: 0,030 % oder weniger,

S: 0,0200 % oder weniger,

Nb: 0,001 % bis 0,100 %,

Al: 0,001 % bis 0,100 %,

O: 0,01 % oder weniger und

N: 0,01 % oder weniger,

gegebenenfalls auf Basis von Massenprozent:

ein oder zwei oder mehr ausgewählt aus der Gruppe bestehend aus:

Cu: 2,00 % oder weniger,
Ni: 2,50 % oder weniger,
Cr: 1,50 % oder weniger,
Mo: 1,00 % oder weniger,
Ti: 0,100 % oder weniger,
V: 0,30 % oder weniger,
B: 0,0100 % oder weniger,
W: 0,50 % oder weniger,
Ca: 0,0200 % oder weniger,
Mg: 0,0200 % oder weniger und
REM: 0,0500 % oder weniger,

wobei der Rest Fe und zufällige Verunreinigungen sind, wobei Ceq, definiert durch die folgende Formel (1), und eine Dicke t [mm] des Stahlblechs $0,0004t + 0,25 \leq Ceq \leq 0,0004t + 0,45$ erfüllen,
ein Mikrogefüge des Stahlblechs eine Versetzungsdichte $\rho$ [m$^{-2}$] von $\rho \leq 4 \times 10^{14}$ an einer Position 1 mm unterhalb einer Oberfläche des Stahlblechs aufweist,
eine durchschnittliche Korngröße an der Position 1 mm unterhalb der Oberfläche des Stahlblechs 15 $\mu$m oder weniger beträgt und
eine durchschnittliche Korngröße in der Mitte einer Dicke des Stahlblechs 20 $\mu$m oder weniger beträgt,

$$Ceq = [C] + [Mn]/6 + ([Cr] + [Mo] + [V])/5 + ([Cu] + [Ni])/15 \qquad (1)$$

wobei jedes Elementsymbol in der Formel (1) den Gehalt des entsprechenden Elements in Masse-% angibt und 0 ist, wenn das Element nicht vorhanden ist, und wobei das Stahlblech eine Streckgrenze YS von 300 MPa oder mehr, eine Zugfestigkeit TS von 400 MPa oder mehr und eine absorbierte Charpy-Schlagenergie von 60 J oder mehr aufweist, die YS und TS gemäß JIS Z 2241 (2011) und der Charpy-Wert gemäß JIS Z 2242 (2018) gemessen werden, wobei die Versetzungsdichte gemäß der Beschreibung gemessen wird.

2. Verfahren zum Herstellen des Stahlblechs gemäß Anspruch 1, umfassend:

Erwärmen einer Bramme mit der chemischen Zusammensetzung im Temperaturbereich von 1000 °C bis 1200 °C,
während des Warmwalzens der erwärmten Bramme
einmaliges Absenken einer Brammentemperatur an der Position 1 mm unter der Oberfläche der Bramme auf eine $A_{r3}$-Temperatur oder darunter und anschließendes Erhöhen der Brammentemperatur über eine $A_{c3}$-Temperatur durch Rekuperation,
Durchführen einer Walzreduktion bei einem Walzreduktionsverhältnis von 25 % oder mehr in einem Temperaturbereich, in dem eine Temperatur des Stahlblechs an der Position 1 mm unterhalb der Oberfläche des Stahlblechs im Bereich von (8250[Nb] + 770 °C) bis zur $A_{r3}$-Temperatur liegt, anschließendes Durchführen einer Walzreduktion mit einem Gesamtwalzreduktionsverhältnis von 15 % oder weniger in einem Temperaturbereich, in dem die Temperatur des Stahlblechs an der Position 1 mm unterhalb der Oberflächenschicht des Stahlblechs unterhalb der $A_{r3}$-Temperatur liegt, und Durchführen einer Walzreduktion mit einem Gesamtwalzreduktionsverhältnis von 25 % oder mehr in einem Temperaturbereich, in dem die Temperatur des Stahlblechs in der Mitte der Dicke des Stahlblechs (8250[Nb] + 770 °C) oder niedriger und die $A_{r3}$-Temperatur oder höher ist, und nach dem Warmwalzen Durchführen einer Abkühlung bei einer durchschnittlichen Abkühlungsgeschwindigkeit von $2500 \times t^{-1,7}$ °C/s oder mehr in einem Temperaturbereich von 700 °C bis 550 °C in der Mitte der Dicke des Stahlblechs, wobei t [mm] die Dicke des Stahlblechs bezeichnet,
wobei [Nb] den Nb-Gehalt (Masse- %) bezeichnet und
wobei die $A_{r3}$-Temperatur unter Verwendung des in der Beschreibung beschriebenen Verfahrens gemessen wird.

3. Verfahren zum Herstellen eines Stahlblechs gemäß Anspruch 2, das ferner umfasst, dass nach dem Abkühlen ein Anlassen bei einer Anlasstemperatur von 650 °C oder weniger durchgeführt wird.

**Revendications**

1. Plaque d'acier ayant une composition chimique comprenant, sur une base de pourcentage en masse :

C : 0,04 % à 0,14 % ;
Si : 0,03 % à 0,70 % ;
Mn : 0,30 % à 2,50 % ;
P : 0,030 % ou moins ;
S : 0,0200 % ou moins ;
Nb : 0,001 % à 0,100% ;
Al : 0,001 % à 0,100 % ;
O : 0,01 % ou moins ; et
N : 0,01 % ou moins,
éventuellement, sur une base de pourcentage en masse,
un ou deux éléments ou plus choisis dans le groupe constitué par
Cu : 2,00 % ou moins,
Ni : 2,50 % ou moins,
Cr : 1,50 % ou moins,
Mo : 1,00 % ou moins,
Ti : 0,100 % ou moins,
V : 0,30 % ou moins,
B : 0,0100 % ou moins,
W : 0,50 % ou moins,
Ca : 0,0200 % ou moins,
Mg : 0,0200 % ou moins, et
Terres rares : 0,0500 % ou moins
le reste étant du Fe et des impuretés inévitables,
dans laquelle Ceq défini par la formule (1) suivante et une épaisseur t [mm] de la plaque d'acier satisfont à $0{,}0004t + 0{,}25 \leq Ceq \leq 0{,}0004t + 0{,}45$,
une microstructure de la plaque d'acier a une densité de dislocations $\rho$ [m$^{-2}$] de $\rho \leq 4 \times 10^{14}$ à une position de 1 mm en dessous d'une surface de la plaque d'acier,
une grosseur de grain moyenne à la position de 1 mm en dessous de la surface de la plaque d'acier est de 15 $\mu$m ou moins, et
une grosseur de grain moyenne au niveau d'un centre d'une épaisseur de la plaque d'acier est de 20 $\mu$m ou moins,

$$Ceq = [C] + [Mn]/6 + ([Cr] + [Mo] + [V])/5 + ([Cu] + [Ni])/15 \qquad (1)$$

où chaque symbole d'élément dans la formule (1) représente la teneur de l'élément correspondant, en % en masse, et vaut 0 en l'absence de l'élément, et où
la plaque d'acier a une limite d'élasticité YS de 300 MPa ou plus, une résistance à la traction TS de 400 MPa ou plus et une énergie de choc Charpy absorbée de 60 J ou plus, YS et TS sont mesurées selon la JIS Z 2241 (2011) et la valeur Charpy est mesurée selon la JIS Z 2242 (2018), moyennant quoi la densité de dislocations est mesurée conformément à la description.

2. Procédé de fabrication de la plaque d'acier selon la revendication 1, comprenant :

le chauffage d'une brame ayant la composition chimique dans la plage de température de 1000 °C à 1200 °C ;
pendant le laminage à chaud de la brame chauffée
après avoir diminué une température de brame à la position de 1 mm en dessous de la surface de la brame à une température inférieure ou égale à $A_{r3}$ puis augmenté la température de brame au-dessus d'une température $A_{c3}$ par récupération ;
la réalisation d'une réduction par laminage à un taux de réduction par laminage de 25 % ou plus dans une plage de température dans laquelle une température de la plaque d'acier à la position de 1 mm en dessous de la surface de la plaque d'acier va de (8250[Nb] + 770 °C) à la température $A_{r3}$, puis la réalisation d'une réduction par laminage à un taux de réduction par laminage total de 15 % ou moins dans une plage de température dans laquelle la température de la plaque d'acier à la position de 1 mm en dessous de la couche de surface de la plaque d'acier est en dessous de la température $A_{r3}$, et la réalisation d'une réduction par laminage à un taux de réduction par laminage total de 25 % ou plus dans une plage de température dans laquelle la température de la plaque d'acier au centre de l'épaisseur de la plaque d'acier est inférieure ou égale à (8250[Nb] + 770 °C) et supérieure ou égale à la température $A_{r3}$, et

après le laminage à chaud, la réalisation d'un refroidissement à une vitesse de refroidissement moyenne de $2500 \times t^{-1,7}$ °C/s ou plus dans une plage de température de 700 °C à 550 °C au centre de l'épaisseur de la plaque d'acier, où t [mm] représente l'épaisseur de la plaque d'acier,

où [Nb] représente la teneur en Nb (% en masse), et

où la température $A_{r3}$ est mesurée en utilisant la méthode décrite dans la description.

3. Procédé de fabrication d'une plaque d'acier selon la revendication 2, comprenant en outre, après le refroidissement, un revenu effectué à une température de revenu de 650 °C ou moins.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3502295 A1
- JP 63020414 A
- JP 49007291 B
- JP 2019052341 A